Europäisches Patentamt

European Patent Office

Office européen des brevets

(19)

(11) Veröffentlichungsnummer: **0 141 981**
.A1

(12) # EUROPÄISCHE PATENTANMELDUNG

(21) Anmeldenummer: 84111364.0

(22) Anmeldetag: 24.09.84

(51) Int. Cl.⁴: **C 02 F 1/46**

(30) Priorität: 06.10.83 DE 3336460

(43) Veröffentlichungstag der Anmeldung: 22.05.85
Patentblatt 85/21

(84) Benannte Vertragsstaaten: **AT BE CH FR GB IT LI LU NL SE**

(71) Anmelder: **Hidrotronic Watercleaning Systems, Ltd., Alpenstrasse 14, D-6300 Zug (CH)**

(72) Erfinder: **Miller, Jorge, Calle 190 No. 9A-46, Bogota (CO)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) **Verfahren und Vorrichtung zum Reinigen von Wasser.**

(57) Die Erfindung betrifft ein Verfahren zum Reinigen von Wasser. Es wird angestrebt, eine gründliche Reinigung mit einfachen Mitteln zu erzielen. Hierzu werden mittels Elektrolyse von Elektroden Ionen freigesetzt zur Bildung von Flocken aus Verunreinigungen, welche Flocken ihrerseits weitere Verunreinigungen binden. Dabei wird gleichzeitig für eine selbsttätige Reinigung der Elektroden durch ein diese umgebendes bewegtes Bett aus festen, nichtleitenden Teilchen gesorgt.

Die Vorrichtung zur Durchführung des Verfahrens weist eine Elektrolysekammer (4), enthaltend ein bewegtes Bett (5) aus festen Teilchen, das die Elektroden (7, 8) umgibt. eine Zuführleitung (3) für das zu reinigende Wasser an einer und ein konisch erweitertes Ausflockungsgehäuse (2) an einer gegenüberliegenden Kammerseite auf.

ACTORUM AG

1

# B e s c h r e i b u n g

Die Erfindung betrifft ein Verfahren zum Reinigen von Wasser und eine Vorrichtung zur Durchführung des erfindungsgemäßen Verfahrens.

Aufgabe der Erfindung ist es, ein Verfahren der genannten Art anzugeben, das eine wirksame Reinigung, insbesondere von fettsäurehaltigen Abwässern, mit einfachen Mitteln ermöglicht.

Die Aufgabe wird erfindungsgemäß durch die Merkmale des Anspruches 1 gelöst.

Bei dem erfindungsgemäßen Verfahren werden auf einfache Weise mittels Elektrolyse von den Elektroden 2- oder 3-wertige Metallionen abgeschieden, welche innerhalb des zu reinigenden Wassers eine Flockenbildung verursachen. Es wird angenommen, daß diese Flocken durch Bildung von kolloidalen Oxid-Hydraten der abgeschiedenen Metallionen zustandekommt. Die gebildeten Flocken binden ihrerseits weitere in dem zu reinigenden Wasser befindliche Verunreinigungen und dienen somit als Transportmittel für deren Abscheiden aus dem zu reinigenden Wasser. Ermöglicht wird die fortlaufende Produktion von Ionen für die Flockenbildung durch das selbsttätige Reinigen der Elektroden mit Hilfe der festen Teilchen des bewegten Bettes. Diese werden je nach Art des Bettes vom durchströmenden Wasser in Bewegung gehalten. Sie bewegen sich dadurch in den verschiedensten Richtungen und Geschwindigkeiten gegen die Oberfläche der Elektroden und an diesen entlang. Daraus ergibt sich der gewünschte Reinigungseffekt. Eine weitere Reinigungswirkung wird dadurch erzielt, daß sich die festen Teilchen durch Rückbewegen nach Mitnahme durch das Wasser an den Elektroden reinigend vorbeibewegen.

Als 2- oder 3-wertige Metalle für die Elektroden werden vorzugsweise Eisen oder Aluminium verwendet.

Bei einer bevorzugten Ausführungsform des erfindungsgemäßen Verfahrens werden mehrere, d.h. mindestens drei Elektroden vorgesehen, die durch Anlegen einer Gleichstromspannung alternierend gepolt werden. Hierbei ist es von Vorteil, die Polarität der einzelnen Elektroden periodisch zu ändern, beispielsweise alle 10 Minuten, damit nicht nur ständig positiv geladene Elektroden verbraucht werden, sondern ein gleichmäßiger Verbrauch der Elektroden und auch gleichzeitig eine gewisse Elektrodenreinigung stattfindet.

Das erfindungsgemäße Verfahren eignet sich insbesondere zur Reinigung von Fettsäuren enthaltendem Wasser. Bei Anwesenheit von Fettsäuren in dem zu reinigenden Wasser verbinden sich die durch Elektrolyse abgeschiedenen Metallionen mit den Fettsäuren zu wasserabstoßenden Metallseifenflocken. Diese Flocken binden wiederum weitere Verunreinigungen, insbesondere organische kolloidale Partikel und führen diese mit sich.

Die Merkmale der Ansprüche 5 bis 7 betreffen jeweils eine Weiterentwicklung des Verfahrens zur Verbesserung der Ausflockung.

Sofern die Elektrolyse mit an eine Stromquelle angeschlossenen Elektroden durchgeführt wird, insbesondere bei Elektroden aus gleichem Material, kann durch das Merkmal des Anspruches 8 die Intensität des Verfahrens gesteuert, bzw. bei wenig verschmutztem Wasser Energie gespart werden.

Einen einfachen Verfahrensschritt hierzu gibt das Merk-

3

mal des Anspruches 9 an.

Die Erfindung schafft auch eine Vorrichtung zur Durchführung des erfindungsgemäßen Verfahrens, gekennzeichnet durch die Merkmale des Anspruches 12.

Daß die Elektroden in einem bewegten Bett aus festen Teilchen angeordnet sind, ergibt auf einfache Weise die oben bereits geschilderte selbsttätige Reinigung der Elektroden. Ihre ständige Wirksamkeit ist damit gewährleistet. Die konische Erweiterung des Ausflockungsgehäuses bremst zu raschen Weiterfluß und gestattet den aus dem Bett mitgerissenen festen Teilchen die Rückbewegung in die Elektrolysekammer.

Für die Ausflockung vorteilhafte Werkstoffe der Elektroden sind durch die Merkmale der Ansprüche 14 und 15 angesprochen.

Eine energiesparende Möglichkeit der Elektrolyse gibt das Merkmal des Anspruches 16 an, da eine Ionenabgabe sich auch ohne Anschluß der Elektroden an eine Stromquelle erzielen läßt, wenn die Elektroden aus entsprechend abgestimmten unterschiedlichen Metallen bestehen. Bei stark korrosivem Wasser können die Elektroden sogar zu einer Batterie werden, also Spannung liefern.

Das die Elektroden umgebende bewegte Bett kann, wie in den Merkmalen des Anspruchs 17 angegeben, verschiedener Art sein, insbesondere, was die Bewegung der festen Teilchen in dem Bett betrifft. Die Art des Bettes ist in weitem Maße von der Beschaffenheit der festen Teilchen, beispielsweise Granit, Sand oder Kunststoffgranulat, sowie Zahl, Größe und Anordnung der Elektroden abhängig. Als feste, nichtleitende Teilchen für das bewegte Bett eignen sich insbesondere Granitteilchen.

4

Eine wirtschaftliche Regelung der Elektrolyse wird bei an Spannung liegenden Elektroden auf einfache Weise durch das Merkmal des Anspruches 21 ermöglicht. Damit kann bei stark verschmutztem Wasser die Effektivität der Reinigung erhöht, bei wenig verschmutztem Wasser Energie gespart werden.

Eine besonders einfache Einrichtung hierzu wird durch das Merkmal des Anspruches 22 angesprochen.

Das Gehäuse der Elektrolysekammer ist bei Durchführung des erfindungsgemäßen Verfahrens immer negativ geladen, da bei einer Umpolarisierung sonst Korrosion auftreten würde. Als Metall für das Elektrolysekammergehäuse eignet sich beispielsweise Stahl.

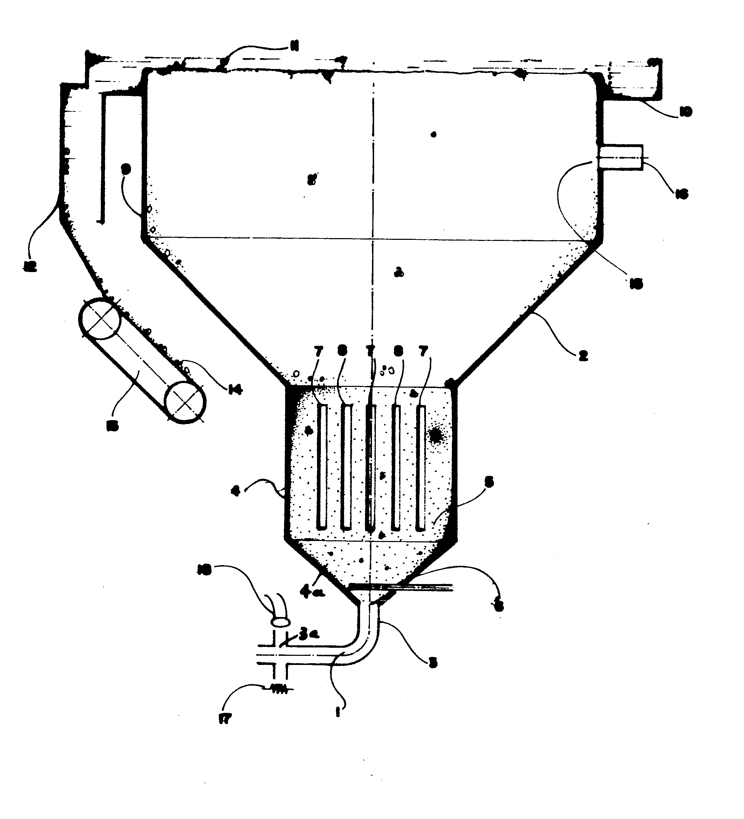

Nachstehend wird anhand der einzigen Zeichnungsfigur eine Vorrichtung zur Durchführung des erfindungsgemäßen Verfahrens und das damit durchgeführte Verfahren beschrieben.

Zu reinigendes Wasser 1 wird über eine Zuführleitung 3 von unten in eine Elektrolysekammer 4 eingeführt. An die Elektrolysekammer 4 schließt sich nach oben ein sich konisch erweiterndes Ausflockungsgehäuse 2 an, das in einen zylindrischen oberen Teil 9 übergeht.

Die Elektrolysekammer 4 enthält ein Bett 5 aus festen Teilchen. Im unteren, von der Zuführleitung sich konisch erweiternden Teil 4a der Elektrolysekammer 4 ist ein Luftgebläse 6 eingebracht. Im zylindrischen Teil der Elektrolysekammer 4 sind Elektroden 7 und 8, auf nicht gezeigte Weise gehaltert, in das Bett 5 eingetaucht. Sie können, in hier nicht dargestellter Weise, jeweils elektrisch angeschlossen sein.

5

Am oberen, zylindrischen Teil 9 des Ausflockungsgehäuses 2 ist ein oben offener Ringkanal 10 angebracht, zur Aufnahme von dort austretendem Schaum 11. Der Ringkanal 10 ist mit einem Ableitungskanal 12 verbunden. Dieser enthält einen Gewebe- bzw. Stoffilter 13. Die Weiterleitung dort entstehender wasserabweisender Stoffe 14 ist nicht dargestellt.

In den zylindrischen Teil 9 des Ausflockungsgehäuses ist unterhalb des Ringkanals 10 eine Abzugsleitung 16 für sauberes Wasser angeschlossen.

An der Zuführleitung 3 ist vor deren Eintritt in die Elektrolysekammer 4 an einem durchsichtigen Abschnitt 3a auf einer Seite eine Lichtquelle 17 und auf der anderen Seite ein Lichtsensor 18 angeordnet. Der Lichtsensor 18 steuert abhängig von seiner Beaufschlagung die Spannung an den Elektroden, falls diese angeschlossen sind.

Mit der beschriebenen Vorrichtung wird Wasser, insbesondere Abwasser, wie folgt gereinigt:

Das zu reinigende Wasser 1 strömt durch die Zuführleitung 3 zur Elektrolysekammer 4. Beim Passieren des durchsichtigen Abschnittes 3a stellt der Lichtsensor anhand der Trübung des Wassers den Verschmutzungsgrad fest und regelt danach die Spannungszufuhr zu den Elektroden 7 und 8. Beim Eintritt in die Elektrolysekammer erhält das Wasser eine Fließgeschwindigkeit, die sich in der Größenordnung der Bewegungsgeschwindigkeit der festen Teilchen des Bettes 5 bewegt. Diese Geschwindigkeit liegt ungefähr bei einem Zehntel der freien Fallgeschwindigkeit der Teilchen im Wasser. Durch das Luftgebläse 6 wird unterhalb der Elektroden zusätzlich Luft in die Elektrolysekammer eingeblassen, welche die Bewegung in der Elektrolysekammer verstärkt.

6

Die Elektroden, vorzugsweise aus Aluminium oder Eisen, scheiden Ionen ab. Diese verbinden sich mit Verunreinigungen, insbesondere mit Fettsäuren, zu wasserabstoßenden Flocken, beispielsweise metallischen Seifen. Diese Flocken binden ihrerseits weitere Verunreinigungen, insbesondere organische kolloidale Partikel und führen diese mit sich. Beim Austritt aus der Elektrolysekammer 4 wird durch die konische Erweiterung des Ausflockungsgehäuses 2 die Strömungsgeschwindigkeit so reduziert, daß die Bindung weiterer Verunreinigungen durch die elektrolytisch gebildeten Flocken weiter fortschreiten kann. Ferner können die aus dem Bett mitgerissenen festen Teilchen sich in Folge ihres höheren spezifischen Gewichtes in die Elektrolysekammer 4 zurückbewegen. Sie bewegen sich dabei auch reinigend an den Elektroden entlang.

Die ausgeflockten Verunreinigungen bilden an der Oberfläche des Ausflockungsgehäuses eine Schaumschicht 11, die in den Ringkanal 10 überfließt. Sie gelangt von dort durch den Ableitungskanal 12 über den Stoffilter 13. Ein dort entstehendes wasserabstoßendes Produkt 14 wird auf nicht gezeichnete Weise ausgeschieden.

Das gereinigte Waser 15 gelangt durch die Abzugsleitung 16 aus dem Ausflockungsgehäuse und wird über eine nicht gezeichnete Sandfilteranlage weitergereinigt.

Die Wirksamkeit der Elektroden 7 und 8, d.h., die laufende Abgabe von Ionen zur Flockenbildung, wird durch die festen Teilchen des Bettes 5 gewährleistet. Diese bewegen sich sowohl innerhalb der Elektrolysekammer unter der Einwirkung des Wasser- und Luftstromes gegen die Elektroden und an diesen entlang, als auch bei der Rückbewegung aus dem Ausflockungsgehäuse, wenn sie aus dem Bett mitgerissen wurden. Diese selbsttätige Reinigung

7

der Elektroden ist nicht nur bei stark verschmutztem Abwasser, sondern auch bei der Reinigung von relativ sauberem Rohwasser notwendig. Die Reinigung der Elektroden dient der Entfernung von Oxid-Filmen, die sonst die Elektroden überziehen und die Ionenabgabe verhindern können.

Die Lichtquelle 17 und der ihr gegenüberliegende Lichtsensor 18 messen die Wasserverunreinigung anhand dessen Trübung, d.h., der Behinderung des Lichtstrahles. Der Sensor steuert dementsprechend die Stromversorgung der Elektroden und damit die Intensität der Elektrolyse.

Im Rahmen der Erfindung können auch Elektroden unterschiedlichen Materials verwendet werden, die ohne Anlegen einer elektrischen Spannung Ionen produzieren. Bei stark korrosivem Wasser, speziell bei der Verwendung von Aluminiumanoden, kann die Elektrolysekammer sogar zur Batterie werden.

GRÜNECKER, KINKELDEY, STOCKMAIR & PARTNER

PATENTANWÄLTE
EUROPEAN PATENT ATTORNEYS

A. GRÜNECKER, DIPL.-ING
DR. H. KINKELDEY, DIPL.-ING
DR. W. STOCKMAIR, DIPL.-ING. AE E (CALTECH)
DR. K. SCHUMANN, DIPL.-PHYS
P. H. JAKOB, DIPL.-ING
DR. G. BEZOLD, DIPL.-CHEM
W. MEISTER, DIPL.-ING
H. HILGERS, DIPL.-ING
DR. H. MEYER-PLATH, DIPL.-ING

8000 MÜNCHEN 22
MAXIMILIANSTRASSE 58

Hidrotronic Watercleaning Systems Ltd.     20. Sept. 1984
Alpenstr. 14                               EP 1922-30/Fr
CH-6300 Zug/Schweiz

## Verfahren und Vorrichtung zum Reinigen von Wasser

### P a t e n t a n s p r ü c h e

1. Verfahren zum Reinigen von Wasser, dadurch g e - k e n n z e i c h n e t, daß man das zu reinigende Wasser an mindestens zwei gleichen oder verschiedenen Elektroden unterschiedlicher Polarität aus 2- oder 3-wertigen Metallen vorbeiführt, wobei die Elektroden von einem bewegten Bett aus festen, nicht leitenden Teilchen mit einer höheren Dichte als das zu reinigende Wasser umgeben sind.

2. Verfahren nach Anspruch 1, dadurch g e k e n n - z e i c h n e t, daß man als 2- oder 3-wertige Metalle für die Elektroden Eisen oder Aluminium verwendet.

3. Verfahren nach Anspruch 1 und/oder 2, dadurch g e - k e n n z e i c h n e t, daß mindestens drei Elektroden vorgesehen sind, welche durch Anlegen einer Gleichstromspannung alternierend gepolt werden.

4. Verfahren nach mindestens einem der vorangehenden Ansprüche, dadurch g e k e n n z e i c h n e t, daß man die Polarität der einzelnen Elektroden periodisch ändert.

5. Verfahren nach mindestens einem der vorangehenden Ansprüche, dadurch g e k e n n z e i c h n e t, daß das zu reinigende Wasser mittels Druck durch das bewegte Bett geführt wird.

6. Verfahren nach mindestens einem der vorangehenden Ansprüche, dadurch g e k e n n z e i c h n e t, daß zur Verstärkung der Bewegung des Bettes in dieses Luft eingeblasen wird.

7. Verfahren nach mindestens einem der vorangehenden Ansprüche, dadurch g e k e n n z e i c h n e t, daß das zu reinigende Wasser vertikal von unten nach oben durch das bewegte Bett geführt wird.

8. Verfahren nach mindestens einem der vorangehenden Ansprüche, dadurch g e k e n n z e i c h n e t, daß man die angelegte Gleichstromspannung in Abhängigkeit des Verschmutzungsgrades des zu reinigenden Wassers reguliert.

9. Verfahren nach mindestens einem der vorangehenden Ansprüche, dadurch g e k e n n z e i c h n e t, daß der Verschmutzungsgrad optisch durch Messung der

3

Trübung des zu reinigenden Wassers bestimmt wird.

10. Verfahren nach mindestens einem der vorangehenden Ansprüche, dadurch g e k e n n z e i c h n e t, daß man als feste, nicht leitende Teilchen Granitteilchen verwendet.

11. Verfahren nach mindestens einem der vorangehenden Ansprüche, dadurch g e k e n n z e i c h n e t, daß man Fettsäuren enthaltendes Wasser reinigt.

12. Vorrichtung zum Durchführen des Verfahrens nach mindestens einem der Ansprüche 1 bis 11, g e k e n n - z e i c h n e t durch eine Elektrolysekammer (4), enthaltend ein bewegtes Bett (5) aus festen, nicht leitenden Teilchen mit einer höheren Dichte als das zu reinigende Wasser, das die Elektroden (7,8) umgibt, eine Zuführleitung (3) für das zu reinigende Wasser (1) an einer Kammerseite, und ein konisch erweitertes Ausflockungsgehäuse (2) an einer gegenüberliegenden Kammerseite.

13. Vorrichtung nach Anspruch 12, dadurch g e k e n n - z e i c h n e t, daß die Zuführleitung (3) an der Unterseite der Elektrolysekammer (4) und das Ausflockungsgehäuse (2) an der Oberseite der Elektrolysekammer (4) angeordnet sind.

14. Vorrichtung nach Anspruch 12 und/oder 13, dadurch g e k e n n z e i c h n e t, daß die Elektroden (7,8) aus Aluminium bestehen.

15. Vorrichtung nach Anspruch 12 und/oder 13, dadurch g e k e n n z e i c h n e t, daß die Elektroden (7,8) aus Eisen bestehen.

4

16. Vorrichtung nach Anspruch 12 und/oder 13, dadurch g e k e n n z e i c h n e t, daß die Elektroden (7 bzw. 8) aus unterschiedlichen Metallen bestehen.

17. Vorrichtung nach mindestens einem der Ansprüche 12 bis 16, dadurch g e k e n n z e i c h n e t, daß das bewegte Bett (5) als Wirbelschichtbett, träges Bett, Schüttbett, Gleich- bzw. Parallelströmungsbett oder Schnellströmbett ausgebildet ist.

18. Vorrichtung nach einem der Ansprüche 12 bis 17, dadurch g e k e n n z e i c h n e t, daß in dem unteren Bereich (4a) der Elektrolysekammer (4) ein Luftgebläse (6) mündet.

19. Vorrichtung nach mindestens einem der Ansprüche 12 bis 18, dadurch g e k e n n z e i c h n e t, daß das Ausflockungsgehäuse (2) am oberen Rand einen umlaufenden Ringkanal (10) mit einem Ableitungskanal (12) für das ausgeflockte Material (11) aufweist.

20. Vorrichtung nach Anspruch 19, dadurch g e k e n n z e i c h n e t, daß im Abstand vom oberen Rand des Ausflockungsgehäuses (2) eine Abzugsleitung (16) für gereinigtes Wasser (15) angeschlossen ist.

21. Vorrichtung nach mindestens einem der Ansprüche 12 bis 20, dadurch g e k e n n z e i c h n e t, daß in der Zuführleitung (3), für das zu reinigende Wasser (1) eine Kontrolleinrichtung (17,18) für die Wasserverschmutzung angeordnet und mit einer Steuereinrichtung für die Elektrodenspannung verbunden ist.

22. Vorrichtung nach Anspruch 21, dadurch g e k e n n z e i c h n e t, daß die Kontrolleinrichtung aus einer Lichtquelle (17) und einem auf die Wassertrübung reagierenden Lichtsensor (18) besteht.

0141981

Europäisches
Patentamt

**EUROPÄISCHER RECHERCHENBERICHT**

Nummer der Anmeldung

EP 84 11 1364

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 244 842 (THE ELECTRICITY COUNCIL) <br> * Seite 3, Zeile 23 - Seite 4, Zeile 40; Figur 2 * | 1,7,12 | C 02 F 1/46 |
| A | FR-A-2 193 790 (STANLEY DENKI u.a.) <br> * Seite 12, Ansprüche 1-6 * | 1-22 | |
| A | DE-A-2 316 047 (EPAP) <br> * Seiten 23,24 * | 1-22 | |
| A | FR-A-1 500 269 (CENTRE NAT. DE LA RECHERCHE SCIENTIFIQUE) <br> * Insgesamt * | 1-22 | |
| A | DE-A-2 548 031 (MITSUBISHI) <br> * Seite 17, Absatz 4 - Seite 18, Absatz 1 * | 1,2 | RECHERCHIERTE SACHGEBIETE (Int. Cl.4) <br><br> C 02 F |
| A | BE-A- 503 633 (TUBES DE LA MEUSE) <br> * Insgesamt * | 1,2 | |

Der vorliegende Recherchenbericht wurde für alle Patentansprüche erstellt.

| Recherchenort <br> DEN HAAG | Abschlußdatum der Recherche <br> 01-02-1985 | Prüfer <br> VAN AKOLEYEN H.T.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82